## Europäisches Patentamt
## European Patent Office
## Office européen des brevets

(19)

(11) Veröffentlichungsnummer: **0 014 352**
**A1**

(12)
# EUROPÄISCHE PATENTANMELDUNG

(21) Anmeldenummer: 80100230.4

(22) Anmeldetag: 18.01.80

(51) Int. Cl.³: **G 01 F 23/00**

(30) Priorität: 02.02.79 DE 2903906

(43) Veröffentlichungstag der Anmeldung:
20.08.80 Patentblatt 80/17

(84) Benannte Vertragsstaaten:
AT BE CH FR GB IT LU NL SE

(71) Anmelder: Alfelder Eisenwerke Carl Heise Kom.-Ges.
vorm. Otto Wesselmann & Cie
Hannoversche Strasse 7
D-3220 Alfeld(DE)

(72) Erfinder: Junghänel, Arnold
Im Katthagen 22
D-3220 Alfeld (Leine)(DE)

(74) Vertreter: Bibrach, Rudolf, Dipl.-Ing. et al,
Patentanwälte Dipl.-Ing. R. Bibrach Dipl.-Ing. E. Rehberg
Postfach 7 38
D-3400 Göttingen(DE)

(54) Einrichtung zum Messen der Füllstandshöhe in Behältern.

(57) Vorrichtung zum Messen der Füllstandshöhe in Silos und anderen Behältern, mit einer Messkette (10), die bis zum Behälterboden reicht und deren freihängendes Gewicht jeweils ein Mass für die Füllstandshöhe ist, einer Hubeinrichtung (8) und einer Messbrücke (5,6).

Die Messbrücke (5,6), der Hubzylinder (8) und die Messkette (10) sind in Reihe hintereinander bzw. übereinander vorgesehen, so dass eine Parallelschaltung dieser Elemente mit der entsprechenden Baubreite vermieden wird. Durch die Reihenschaltung und die Nachschaltung des Hubzylinders nach der Messbrücke (5,6) ergibt sich der Vorteil, dass die Feder (7) der Messbrücke (5,6) auch in den messfreien Perioden nicht entlastet wird, so das die Feder dauernd kraftmässig beaufschlagt ist.

EP 0 014 352 A1

Die Erfindung bezieht sich auf eine Einrichtung zum
Messen der Füllstandshöhe in Silos und anderen Behältern, mit einer über einen Hubzylinder heb- und
senkbar aufgehängten, bis zum Behälterboden reichenden
Meßkette und einer eine Feder aufweisenden Meßbrücke
die auf einen parallel zum Federweg angeordneten Meßwertgeber einwirkt. Die Einrichtung dient insbesondere
der kontinuierlichen oder zeitlich abständigen Messung
der Füllstandshöhe in Silos für Schwergüter, beispielsweise Mineralien bei der Herstellung von Straßenbaustoffen.

Eine Einrichtung der genannten Art ist aus der US-PS
4 o43 199 bekannt. Dabei ist der Hubzylinder elektromagnetisch ausgebildet. Die Meßkette ist durch eine
durchbrochene Biegefeder hindurchgeführt und reicht
bis zum Behälterboden hinab. Sie ist darüber hinaus
durch einen sie umgebenden ortsfest angeordneten
Schlauch geschützt. An der Meßkette befindet sich in
Höhe der Biegefeder eine Kupplungseinrichtung, mit
deren Hilfe und bei entsprechender Betätigung des
Hubzylinders jeweils die Möglichkeit besteht, die Biegefeder mit dem Gewicht des jeweils frei hängenden
Kettenstückes zu belasten. Auf diese Weise erhält man
unterschiedliche Ausschläge an der Biegefeder, die ein
Maß für die Befüllung des Silos sind. Die Biegefeder
erstreckt sich quer zur Meßkette. Auch die Hubeinrichtung ist infolge ihres elektromagnetischen Aufbaus im
wesentlichen quer zur Richtung der Meßkette ausgedehnt
so daß diese Meßeinrichtung eine relativ breite Bauweise
aufweist.

Eine weitere Meßeinrichtung für die Füllstandshöhe inBehältern und Silos ist aus der DE-GM 78 o7 121 bekannt.
An einem Gestell im oberen Bereich des Silos ist dabei
zunächst eine Meßbrücke über zwei Federn aufgehängt.

-2-

dazu ist mit dem Gestell ein Hubzylinder verbunden,
an welchen die Meßkette beweglich und abhebbar aufgehängt ist. Parallel zu dem Federweg ist weiterhin
ein Meßwertgeber angeordnet. Zwischen der Meßkette
und der Meßbrücke ist eine Kupplungseinrichtung vorgesehen, so daß es infolge Betätigung des Hubzylinders möglich ist, das Gewicht der freihängenden
Meßkette von dem Hubzylinder abzuhängen und auf
die Meßbrücke zu verlagern, so daß dann durch entsprechende Ausschläge des Meßwertgebers ein Signal
für die Füllstandshöhe erhalten wird. Auch bei
dieser Einrichtung ist der Hubzylinder und die Meßbrücke in Parallelschaltung angeordnet, so daß
die Einrichtung ebenfalls relativ breit baut. Ein
weiterer Nachteil der bekannten Einrichtungen ist
darin zu sehen, daß die Federn der Meßbrücke jeweils
voll be- und auch wieder voll entlastet werden, also
die Feder jeweils abhängig von der Füllstandshöhe
um einen sehr großen Federweg gedehnt bzw. bewegt
wird. Auch gibt es oft Anwendungsfälle, bei denen
eine breite Bauweise der Einrichtung störend ist,
da der Bereich am Behälterdeckel oft nahezu vollständig für die Materialzufuhr in den Behälter
zur Verfügung stehen muß.

Der Erfindung liegt die Aufgabe zugrunde, eine Einrichtung der eingangs beschriebenen Art so auszubilden, daß eine weniger Raum erfordere Bauweise
möglich wird. Dabei soll die Einrichtung beanspruchungsgerechter ausgebildet sein.

Erfindungsgemäß wird dies dadurch erreicht, daß die
Meßbrücke, der Hubzylinder und die Meßkette in
Reihe hintereinander bzw. übereinander vorgesehen
sind. Die Erfindung löst sich damit von der Parallelschaltung des Standes der Technik und ordnet die einzelnen Teile der Einrichtung in Reihe hintereinander bzw. übereinander an. Damit wird der Platzbedarf der Einrichtung in horizontaler Richtung auf
den Durchmesser des Hubzylinders beschränkt. Weit
ausladende Meßbrücken erübrigen sich. Überraschend
tritt der weitere Vorteil auf, daß die Feder der
Meßbrücke auch in den meßfreien Perioden nicht entlastet wird, so daß die Feder der Meßbrücke zu
allen Zeiten kraftmäßig beaufschlagt wird, wobei
die auftretenden Kräfte jedenfalls in sehr viel
geringerem Maße schwanken als bei den Einrichtungen
des Standes der Technik, wo eine völlige Entlastung
der Feder in den meßfreien Perioden stattfindet.
Die Einrichtung besitzt allein hierdurch eine
wesentlich vergrößerte Lebensdauer und ist an den
robusten Meßbetrieb, insbesondere für Schwergüter,
bestens angetan.

Die Meßkette kann am unteren Ende des Hubzylinders,
insbesondere an dessen Kolbenstange, gelenkig aber
fest angeordnet sein. Eine Kupplungseinrichtung, wie
Sie im Stand der Technik erforderlich ist, entfällt
bei der erfindungsgemäßen Ausbildung.

Die Meßbrücke kann im einzelnen aus zwei konzentrisch
zueinander angeordneten, axial gegeneinander verschiebbaren Teilen bestehen, die ebenfalls in konzentrischer
Anordnung ein oder mehrere Federn eingeschaltet sind.
Die Meßbrücke baut daher auch wesentlich schmaler.
Sie läßt sich leicht auf einem Raum unterbringen, der
innerhalb des Maximaldurchmessers des Hubzylinders liegt.
Auch die Beanspruchung der Feder ist durch ihre koaxiale
Anordnung günstiger als im Stand der Technik.

-4-

Die gesamte Einrichtung kann über einen Teil der Meßbrücke an der Behälterabdeckung, einem Träger od. dgl., aufgehängt sein. Selbstverständlich läßt sich die Meßeinrichtung auch oberhalb eines Behälterdeckels aufsetzen, wobei der Behälterdeckeldann für die Durchführung der Meßkette entsprechend durchbrochen sein muß. Mehrere Befestigungspunkte für die Meßbrücke einerseits an der Behälterabdeckung bzw. an einem Träger entfallen aber.

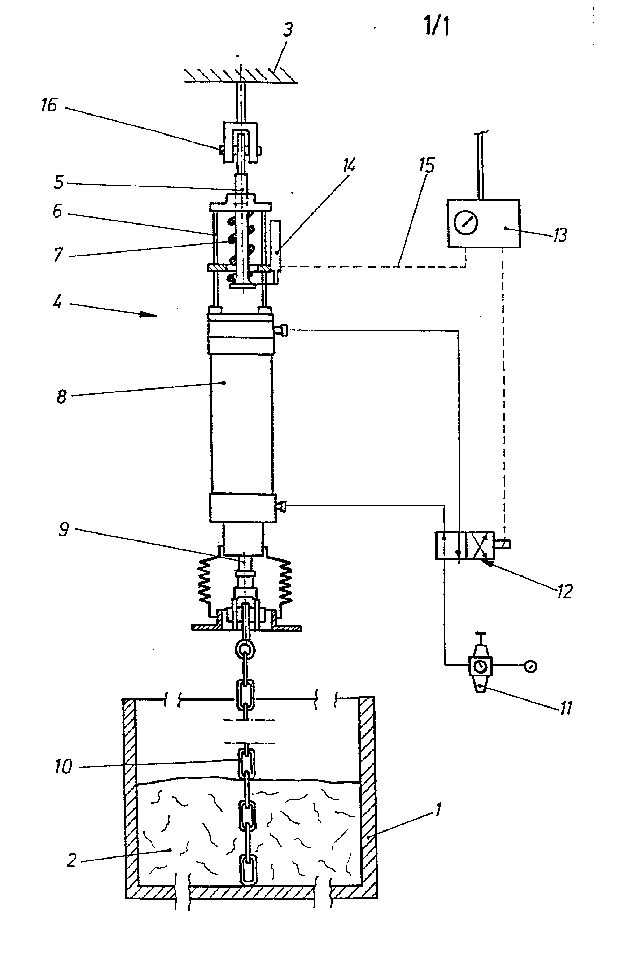

Die Erfindung wird anhand eines bevorzugten Ausführungsbeispieles weiter beschrieben, welches in der Zeichnung dargestellt ist.

In einem schematisch angedeuteten Behälter 1 befindet sich das eingefüllte Gut 2, welches je nach Füllungsgrad mehr oder weniger hoch im Behälter 1 ansteht. An einem Träger 3 oberhalb des Behälters 1, der auch mit der Behälterabdeckung zusammenfallen kann, ist die Meßeinrichtung 4 aufgehängt. Diese weist eine Meßbrücke 5,6 auf, die im wesentlichen aus den beiden relativ zueinander axial verschiebbaren Teilen 5 und 6 besteht, zwischen die eine oder mehrere Federn 7 konzentrisch eingeschaltet sind. Am unteren Ende des Teils 6 ist der Hubzylinder 8 angebracht, der beispielsweise pneumatisch betätigbar ist und an dessen Kolbenstange 9 die Meßkette 1o gelenkig aber fest angeordnet ist, die bis zum Behälterboden durch das eingefüllte Gut 2 hindurch hinabreicht. Die Versorgung des Druckzylinders 8 mit Druckluft ist nur

-5-

schematisch angedeutet. Von einer nicht dargestellten
Druckluftquelle gelangt Druckluft über einen Druckminderer 11 zu einem Schaltventil 12, dessen Wirkungsweise ohne weiteres überschaubar ist. Das
Schaltventil 12 wird von einer Schaltuhr 13 betätigt, so daß in entsprechenden zeitlichen Abständen jeweils Messungen durchgeführt werden.
Parallel zum Federweg oder zu einem Teil des
Federweges der Feder 7 ist ein Meßwertgeber 14
angeordnet, der beispielsweise aus einem elektrischen oder elektronischen Baustein bestehen
kann. Das von ihm erhältliche Signal für die Füllabstandshöhe abhängig vom Federweg wird über die
Leitung 15 übertragen und in einer Anzeige sichtbar gemacht. Auch das Teil 5 der Meßbrücke 5,6
kann über das Gelenk 16 an dem Träger aufgehängt
sein.

Es ist ersichtlich, daß die Baubreite der Meßeinrichtung sehr klein ist. Die größte Baubreite
wird praktisch durch den Durchmesser des Hubzylinders 8 bestimmt.

Die Meßeinrichtung arbeitet wie folgt:
Beim Einfüllen des Gutes 2 in den Behälter 1 und
auch beim Abzug des Gutes 2 im Bereich des Behälterbodens ändert sich die Füllstandshöhe im Behälter
1 laufend. Um diese zu messen wird nun der Hubzylinder 8 zunächst derart betätigt, daß die
Kolbenstange 9 in den Hubzylinder 8 eingefahren
wird, wodurch die Meßkette 1o um einen gewissen Betrag angehoben wird. Anschließend wird das Steuerventil 12 umgeschaltet, so daß die Kolbenstange 9 aus dem Hubzylinder 8 ausfährt. Hierdurch legt sich das freihängende Kettenstück der Meßkette 1o mit einem oder mehreren Kettengliedern auf der Oberfläche des Gutes 2 auf, während in der Regel der Rest der Meßkette innerhalb des Gutes 2 verbleibt. Auf jeden Fall wirkt als Gewichtskoponente auf die Meßbrücke 5, 6 nur der freihängende Teil der Meßkette 1o. Das Gewicht des Hubzylinders selbst sowie des Teiles 6 der Meßbrücke kann leicht tariert werden. Je nach dem Gewicht des freihängenden Kettenstückes der Meßkette 1o wird sich der Federweg der Feder 7 ändern und damit der Meßwertgeber 14 beeinflußt, so daß ein entsprechendes Signal abgegeben wird.

Die Messung läßt sich dann in den gewünschten zeitlichen Abständen wiederholen. Selbstverständlich kann auch eine Messung in anderer Schaltung, z.B. nicht in festgelegten zeitlichen Abständen, sondern bei Bedarf, durch eine andere Steuerung erfolgen. Es ist erkennbar, daß die Feder 7 niemals vollständig entlastet wird. Dies bedeutet, daß die zurückzulegenden Federwege in einer Größenordnung ablaufen, bei der die Feder nur schonend beansprucht wird, so daß sich eine angepaßte Beanspruchung der Einrichtung insbesondere im rauhen Alltagsbetrieb beim Messen der Füllstandshöhe von Schwergütern in Behältern und Silos ergibt.

Patentansprüche:

1. Einrichtung zum Messen der Füllstandshöhe in Silos und anderen Behältern, mit einer über einen Hubzylinder heb- und senkbar aufgehängten, bis zum Behälterboden reichenden Meßkette und einer eine Feder aufweisenden Meßbrücke, die auf einen parallel zum Federweg angeordneten Meßwertgeber einwirkt, dadurch gekennzeichnet, daß die Meßbrücke (5,6), der Hubzylinder (8) und die Meßkette (1o) in Reihe hintereinander bzw. übereinander vorgesehen sind.

2. Einrichtung nach Anspruch 1, dadurch gekennzeichnet, daß die Meßkette (1o) am unteren Ende des Hubzylinders (8), insbesondere an dessen Kolbenstange (9), gelenkig, aber fest angeordnet ist.

3. Einrichtung nach Anspruch 1, dadurch gekennzeichnet, daß die Meßstücke (5, 6) aus zwei konzentrisch zueinander angeordneten, axial gegeneinander vorschiebbaren Teilen (5 und 6) besteht, in die ebenfalls in konzentrischer Anordnung eine oder mehrere Federn (7) eingeschaltet sind.

4. Einrichtung nach Anspruch 3, dadurch gekennzeichnet, daß die gesamte Einrichtung über einen Teil (5) der Meßbrücke (5, 6) an der Behälterabdeckung, einem Träger (3) od. dgl. aufgehängt ist.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,A | US - A - 4 043 199 (J.G. GREER) <br> * Abbildungen 1,2 * | 1 |
| D,A | DE - U - 7 807 121 (A. HAVENSTEIN <br> * Abbildung 1 * | 1 |

**KLASSIFIKATION DER ANMELDUNG (Int.Cl. 3)**

G 01 F 23/00

**RECHERCHIERTE SACHGEBIETE (Int. Cl. 3)**

G 01 F 23/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-05-1980 | THIBO |